Europäisches Patentamt

(19) European Patent Office

Office européen des brevets

(11) Numéro de publication: **0 132 482**

**A1**

## (12) DEMANDE DE BREVET EUROPEEN

(21) Numéro de dépôt: **83440043.4**

(22) Date de dépôt: **20.07.83**

(51) Int. Cl.⁴: **A 23 B 9/00**

(43) Date de publication de la demande:
**13.02.85 Bulletin 85/7**

(84) Etats contractants désignés:
**AT BE CH DE FR GB IT LI LU NL SE**

(71) Demandeur: **Fagniart, Gaston**
**215 Avenue Dampierre**
**Valenciennes (Nord)(FR)**

(71) Demandeur: **Lemaire, Jean-Pierre**
**13 rue de Bretagne**
**Valenciennes (Nord)(FR)**

(72) Inventeur: **Fagniart, Gaston**
**215 Avenue Dampierre**
**Valenciennes (Nord)(FR)**

(72) Inventeur: **Lemaire, Jean-Pierre**
**13 rue de Bretagne**
**Valenciennes (Nord)(FR)**

(74) Mandataire: **Lepage, Jean-Pierre**
**Cabinet Lepage & Aubertin Innovations et Prestations**
**23/25, rue Nicolas Leblanc**
**F-59011 Lille Cédex 1 (Nord)(FR)**

(54) **Procédé et installation de conservation sous déshydratation lente de produits contenant une certaine quantité d'eau.**

(57) L'invention est relative à un procédé de conservation sous déshydratation lente des produits contenant une certaine quantité d'eau telle que par exemple les céréales et semences et une installation de mise en oeuvre du procédé.

Selon l'invention, l'installation (1) pour la déshydratation lente des graines de céréales (2) stockées se présente sous la forme d'un silo (3) étanche à l'intérieur duquel on crée et entretient le vide.

Selon le procédé de l'invention, on entretient le vide à une valeur inférieure à celle de la vapeur d'eau à la température de stockage et tel que l'hygrométrie du milieu interstitiel du produit stocké soit maintenue à une valeur inférieure à 100 % HR.

L'invention trouvera tout particuliérement son application dans le domaine agricole pour le stockage et la conservation des produits céréaliers présentant une teneur en eau élevée.

FIG 1

0132482

L'invention est relative à un procédé de conservation sous déshydratation lente de produits contenant une certaine quantité d'eau telle que les céréales par exemple, et à une installation de mise en oeuvre du procédé. L'invention trouvera tout particulièrement son application pour le stockage du grain dans le domaine agricole et la réalisation de silos destinés à cet usage.

On connaît le stockage des produits alimentaires inertes sous vide afin de prolonger leur durée de conservation. Toutefois, en ce qui concerne les produits qui présentent une forte teneur en eau, tels que les céréales par exemple, la simple mise sous vide ne suffit pas à assurer la conservation de ce type de produit . Il a été constaté jusqu'à présent que le stockage des céréales à forte teneur en eau pendant de longues périodes est quasiment impossible par suite de dégradations du produit.

A l'heure actuelle, il est donc procédé à un séchage du produit avant son stockage, par exemple, le maïs qui est récolté à une teneur en eau de 30 % MH est séché à 15 % MH pour son stockage.

Ce séchage d'une part est très coûteux car il nécessite d'une part une manutention importante du produit et d'autre part une dépense importante en énergie, de l'ordre de 1.200 kilocalories par litre d'eau évaporée en ce qui concerne le maïs, ce séchage a de plus l'inconvénient de diminuer le pouvoir nutritif du produit. En outre, il faut noter que l'utilisation des séchoirs est réduite à la période des récoltes, ce qui a pour résultat un engorgement des séchoirs durant la saison des récoltes, puis une inutilisation de ceux-ci pendant le reste de l'année.

Il a également été essayé de stocker les céréales à forte teneur en eau dans des silos sous vide. Toutefois, cette tentative n'a pas donné de bons résultats, car le grain est encore vivant au moment du stockage et ses enzymes continuent à produire des gaz tels que du gaz carbonique. Par conséquent, postérieurement à la mise sous vide, on enregistre une remontée de la pression dans le silo qui détruit le vide en mettant celui-ci sous pression.

Le but principal de la présente invention est de présenter un procédé de conservation sous déshydratation lente notamment des céréales et semences qui présentent une très faible consommation d'énergie. Les essais qui ont été menés en ce qui concerne la conservation du maïs ont permis d'atteindre des consommations de l'ordre de 200 kilocalories par litre d'eau évaporée pour la conservation du maïs.

- 2 -

D'autres buts et avantages de la présente invention apparaîtront au cours de la description qui va suivre, qui n'est cependant donnée qu'à titre indicatif et qui n'a pas pour but de la limiter.

Le procédé de conservation sous déshydratation lente notamment des céréales et semences, en conteneur étanche est caractérisé en ce que l'on met le produit stocké sous vide et que l'on entretient ce vide.

L'invention sera mieux comprise si l'on se réfère à la description ci-dessous, ainsi qu'aux dessins en annexe qui en font partie intégrante.

La figure 1 illustre une installation de déshydratation lente qui se présente sous la forme de deux silos présentant des moyens pour créer une atmosphère de conservation du grain selon l'invention.

La figure 2 représente la courbe d'équilibre d'humidité air-maïs-grain à 25 °C.

La figure 3 représente une corrélation entre le nombre de moisissures et le dégagement cumulé de gaz carbonique produit par le maïs.

La figure 4 représente une corrélation entre le pouvoir germinatif et le dégagement cumulé de gaz carbonique produit par du maïs.

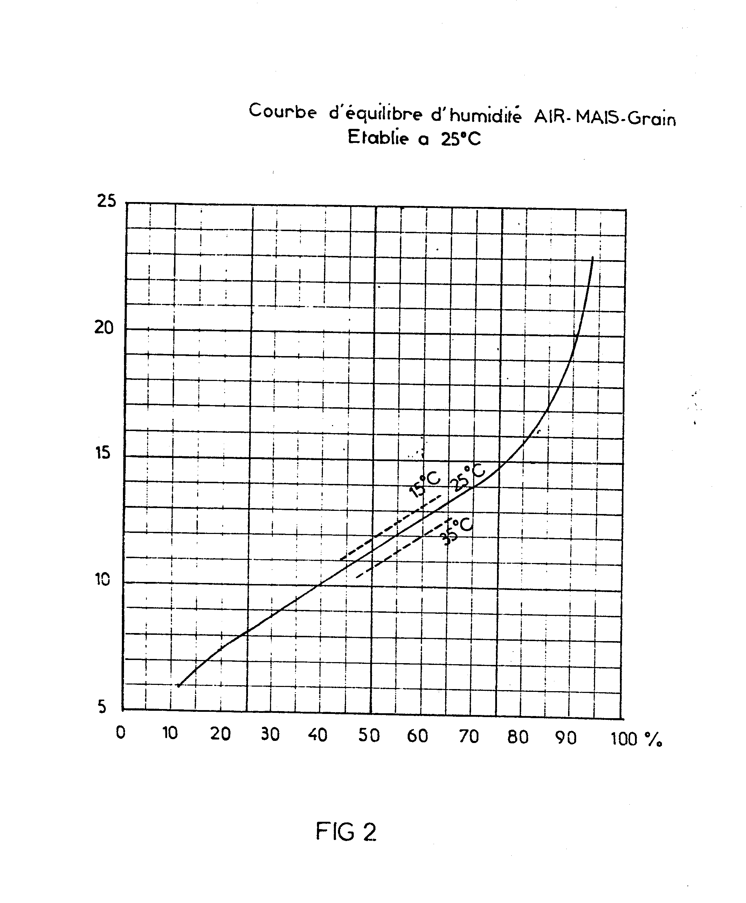

La courbe d'équilibre d'humidité air-maïs-grain, représentée à la figure 2, montre la réversibilité des variations de teneur en eau en fonction des variations de l'humidité relative ambiante.

Le procédé de conservation sous déshydratation lente empêche la réversibilité du phénomène, en favorisant uniquement la désorption du produit, ceci aboutissant à une diminution lente de sa teneur en eau.

De plus, une régulation thermostatique, permet de moduler l'énergie de pompage en fonction des variations de température de la masse du produit, étant entendu que celles-ci sont très faibles, par le fait que le produit se trouve sous vide et que le transfert de chaleur ne se fait que par les contacts intergranulaires.

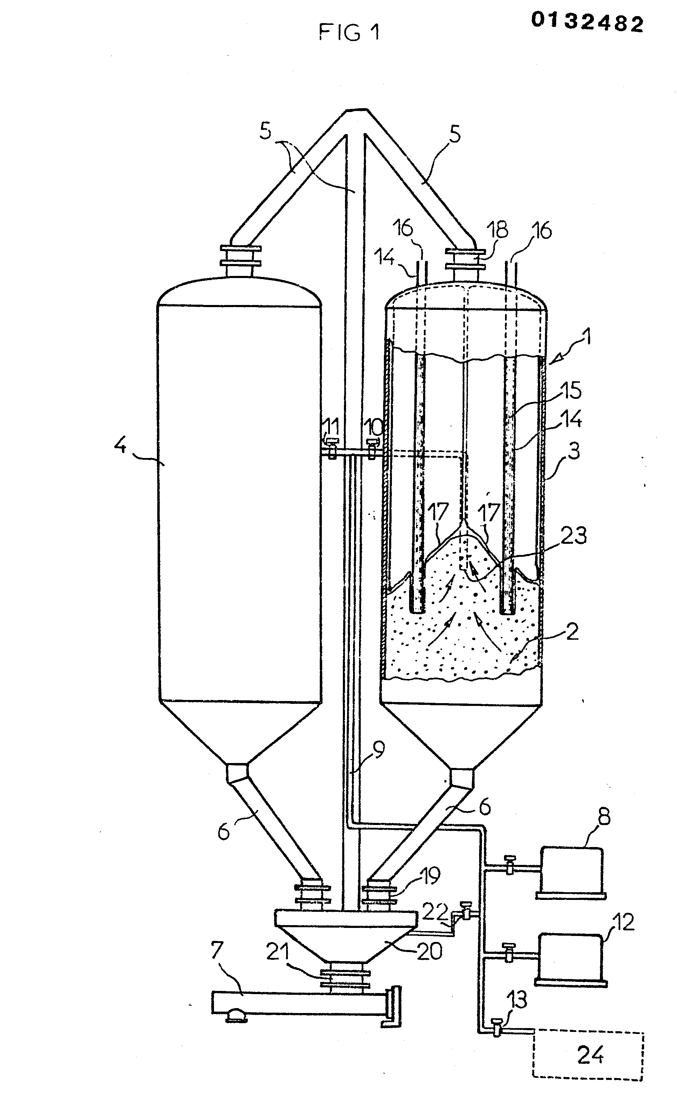

La figure 1 illustre une installation pour la déshydratation lente se présentant sous la forme de deux silos disposant des moyens pour créer une atmosphère de conservation du grain selon l'invention.

Dans la figure 1 qui représente une installation 1 pour le stockage en particulier des céréales 2 ou des semences, on a désigné par les repères 3 et 4 des silos étanches qui servent à la conservation du produit. Des conduits 5 d'amenée des céréales débouchent à la partie supérieure des silos 3 et 4 afin de les remplir de graines.

Les parties inférieures des silos 3 et 4 sont réunies par des conduits d'évacuation 6, qui permettent d'extraire le produit stocké des silos. Les conduites d'évacuation 6 débouchent sur, par exemple, une vis de distribution 7 qui permet d'extraire le produit en quantité voulue et de l'acheminer par exemple vers la benne d'un camion.

L'installation, selon l'invention, sera étanche, et par conséquent, il sera possible de placer le produit 2 contenu dans les silos sous vide.

Le silo 3, situé dans l'exemple du dessin choisi à droite, a été coupé partiellement dans la figure 1, afin de visualiser l'intérieur. Selon l'invention, le silo 3 présente des moyens qui permettent de créer une atmosphère de conservation des produits stockés en particulier, même lorsque ceux-ci présentent une teneur en eau.

Cette atmosphère de conservation des produits 2, qui se traduit par une déshydratation lente du produit est obtenue par l'intermédiaire d'une pompe à vide 12 qui entretient le vide dans l'installation 1 autour d'une valeur préfixée.

La pompe à vide 12 qui est extérieure au silo est reliée à l'intérieur du silo par une canalisation 9, qui peut être commune aux silos 3 et 4 et qui assure l'entretien du vide à l'intérieur du silo. Dans l'exemple choisi, des vannes 10 et 11 permettent d'agir séparément sur le silo 3 ou 4. Etant donné que l'entretien du vide nécessite une pompe de moindre puissance vis-à-vis de celle nécessaire à créer le vide initial, il peut être envisagé une pompe à vide principale 24 qui sert pour créer le vide dans les silos, et une pompe à vide auxiliaire 12 qui prend le relais de la pompe à vide 24 pour entretenir ce vide. En outre, on pourra équiper l'installation d'une pompe de secours 8 qui assurera le service d'entretien du vide, au cas où la pompe de service 12 viendrait à défaillir. Lorsque différentes installations sont utilisées, il peut être économique de disposer une pompe 24 mobile qui viendrait se brancher sur un raccord 13 prévu à cet effet et qui permettrait de créer le vide à l'aide d'une pompe mobile qui sera ensuite déconnectée, le relais pour entretenir le vide étant alors assuré par une pompe auxiliaire du type de la pompe 12.

Il a été montré dans les études agronomiques, que les causes d'altération des récoltes sont l'oxygène, l'azote, le gaz carbonique, l'eau sous forme liquide dite solvante et la température.

Le silo 3, selon l'invention, présente des moyens qui sont les pompes à vide 8, 12 et 24 qui permettent d'éliminer l'oxygène. l'azote. le gaz carbonique et par le vide créé, minimisent les effets de la température extérieure. En effet, la conduction thermique est réduite en raison du vide. Par ailleurs, les conditions du vide seront telles que l'hygrométrie du milieu interstitiel, c'est-à-dire l'espace situé entre les graines stockées, soit maintenue à une valeur inférieure à 100 % de HR. De la sorte, l'eau présente dans les graines se vaporisera à leur surface, ce qui éliminera l'eau sous forme liquide, cette eau est retenue par l'énergie de sorption.

Cette déshydratation lente a pour effet de créer un milieu interstitiel qui ne contient que de la vapeur d'eau sèche. La vapeur d'eau non saturée, qui prend naissance à la surface des graines, se dirige vers l'orifice de pompage 23 en traversant le produit, les graines 2 sont donc soumises à un véritable balayage de vapeur sèche qui tend à éliminer toute la flore et la faune microbienne en suspension dans ce milieu interstitiel. Le risque de pullulation des insectes est supprimé, ceux-ci étant éliminés dès le départ sous le seul effet de la réduction de la pression.

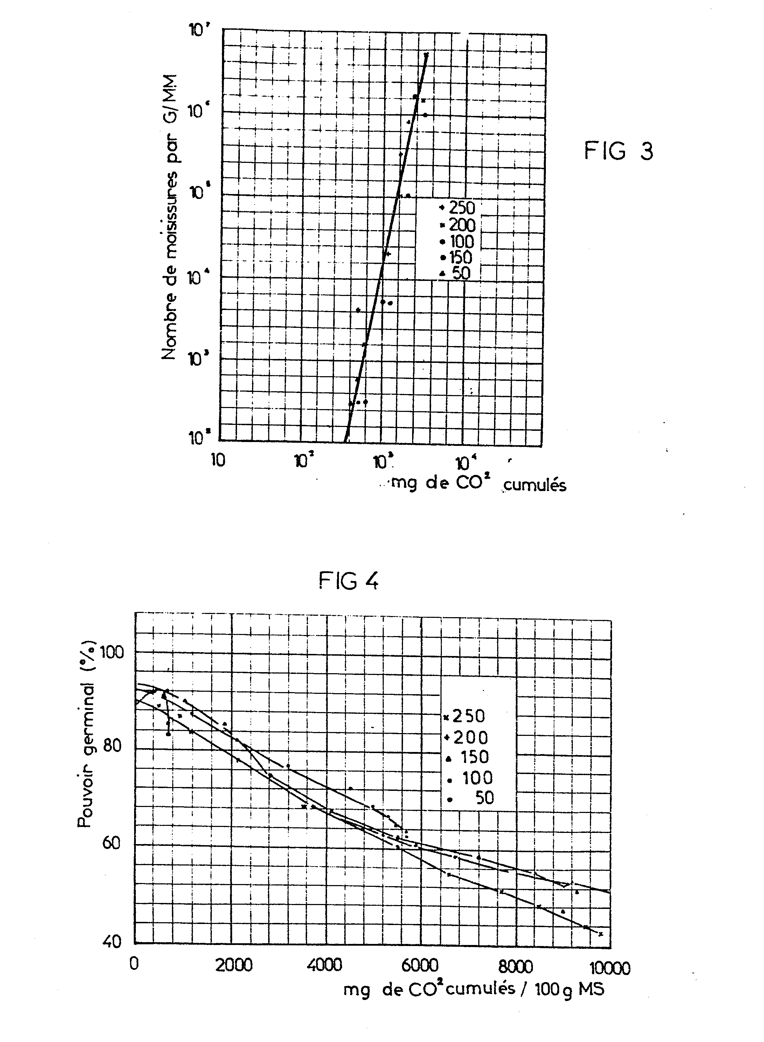

Sous vide, le développement des moisissures n'est pas possible et de ce fait le dégagement de gaz carbonique est interrompu. La graine conserve ainsi tout son pouvoir nutritif et également ses capacités germinatives, comme le montrent les figures 3 et 4.

L'orifice de pompage 23 situé à l'extrémité de la canalisation 9 sera situé de préférence au centre du produit stocké 2 afin que le courant de vapeur d'eau évacuée par la canalisation 9 parcourt toute la masse du produit stocké.

Le dispositif de pompage peut être piloté par une régulation intervenant sur les trois paramètres suivant : hygrométrie, température, pression ou une combinaison de ces ensembles à l'aide de capteurs placés dans le silo 3. Il peut être utilisé une pompe intermittente régulée par un hygrostat, thermostat ou vacuostat ou par un pompage en continu à faible débit par exemple.

Par ailleurs, selon un mode préférentiel de réalisation de l'invention dans l'installation 1, le silo 2 sera pourvu d'une membrane intérieure 17 qui viendra se plaquer sur le produit 2.

Ainsi, il sera possible de limiter artificiellement le volume interne du silo 3 ce qui a pour conséquence de réduire son volume de vide, au volume occupé par les graines de céréales 2. De la sorte, la consommation en énergie pour mettre le silo sous vide sera réduite puisque
seul le volume occupé par les céréales plus exactement le milieu interstitiel, sera placé sous vide, le volume occupé par la partie supérieure des
céréales, situé au-dessus de la membrane, pourra par exemple rester à
la pression atmosphérique. Cette disposition a en outre l'avantage de
réduire l'épaisseur de la paroi du silo. En effet, la partie de la paroi
qui est soumise à la pression des graines est également soumise à la
pression atmosphérique extérieure et ces deux forces sont antagonistes,
ce qui réduit les efforts auxquels sont soumises les parois du silo. Par
contre, la partie de la paroi du silo, sur laquelle ne s'appuient pas les
graines de céréales 2, est soumise dans sa partie extérieure à la pression atmosphérique et également à la pression atmosphérique dans sa partie intérieure et par conséquent la paroi ne doit résister seulement qu'à
son propre poids.

Selon un mode préférentiel de réalisation de la membrane, celle-
ci sera disposée de façon étanche autour d'un tube vertical 14 qui débouchera à la partie supérieure du silo 3 dans l'atmosphère. Ce tube 14
présentera sur toute sa longueur une série de perforations 15 qui permettront à l'air atmosphérique de s'introduire par l'orifice 16 débouchant
à l'air libre à la partie supérieure du tube 14, et de venir s'appliquer
sur la face interne de l'enveloppe 17. De la sorte, l'enveloppe 17 restera
plaquer contre le tube 14 dans la partie du tube plongée dans les graines
de céréales 2, du fait de la pression exercée par ce produit sur l'enveloppe 17, par contre, dans la partie libre du silo 3 située au-dessus du
produit 2, l'enveloppe réalisée dans un matériau souple s'expansera pour
occuper tout le volume libre puisque la pression atmosphérique introduite
par le tube 14 plaquera l'enveloppe contre les parois internes du silo
et contre le produit 2.

Dans un mode préférentiel de réalisation, chaque silo sera
équipé de trois tubes et enveloppes identiques répartis dans le silo.
Pour le bon fonctionnement de l'ensemble, il sera nécessaire de vérifier
que l'orifice de pompage 14 ne puisse jamais être masqué par l'enveloppe
17.

Les conduits d'amenée 5 et les conduits d'évacuation 6 seront
avantageusement équipés de vannes 18 et 19 qui en combinaison avec les
sas permettront de remplir ou de vider le silo avec des graines sans pour
autant que celui-ci se remplisse d'air.

Dans la figure 1 représentée, les conduites d'évacuation 6 sont équipées d'un sas. Ce sas présente à son entrée une vanne 19 et à sa sortie une vanne 21. Pour vider le produit, la vanne 19 est tout d'abord ouverte alors que la vanne 21 reste fermée, le produit s'écoule dans le sas 20, puis une fois que la quantité de produit souhaitée est introduite dans le sas 20, la vanne 19 est fermée. Puis la vanne 21 est ouverte libérant ainsi son contenu vers la vis de distribution 7 qui permet d'évacuer le dit produit. Puis, la vanne 21 est fermée et la mise sous vide du sas peut être réalisée par l'intermédiaire des pompes à vide 8, 12 ou 24, en ouvrant le clapet 22 de liaison du sas 20 à la canalisation 9. Une fois le sas mis sous vide, l'opération d'évidement du silo peut être à nouveau réalisée.

Selon le procédé de conservation sous déshydratation lente en particulier de céréales placées dans un silo étanche selon l'invention, on met le silo sous vide et on entretient ce vide. De la sorte, on élimine en particulier l'oxygène, l'azote et le gaz carbonique et on limite les échanges de température dans le milieu interstitiel des céréales. De préférence, on entretiendra le vide à une valeur légèrement inférieure à celle de la vapeur d'eau à la température de stockage. De la sorte, on limitera la perte en eau du grain stocké. Toutefois, il convient d'éliminer l'eau sous forme liquide solvante et pour cela la pression sera maintenue de telle sorte que l'hygrométrie du milieu interstitiel du produit stocké soit maintenue à une valeur inférieure à 100 % HR.

On créera un balayage du milieu interstitiel par la vapeur d'eau non saturée et évacuée afin de favoriser l'élimination de la flore et de la faune microbienne en suspension dans ce milieu interstitiel. Ce balayage pourra par exemple être obtenu par le flux de vapeur d'eau non saturée qui est aspirée par l'installation de pompage auxiliaire.

De préférence, l'introduction ou l'évacuation de produits nouveaux se fera par l'intermédiaire d'un sas afin de ne pas rompre le vide créé par la conservation des céréales stockées.

De bons résultats pour la conservation du maïs ont été obtenus en utilisant un vide poussé jusque 1,14 Pascal. Un vide plus poussé a également été essayé et a donné de bons résultats, il n'est toutefois pas nécessaire d'abaisser inutilement la pression résiduelle car tout abaissement de la pression est coûteux au niveau des moyens à mettre en oeuvre et également sur le plan énergétique.

Le mode de réalisation qui vient d'être décrit n'est donné qu'à titre indicatif, et d'autres mises en oeuvre de la présente invention, à la portée de l'Homme de l'Art, auraient pu être adoptées sans pour autant sortir du cadre de celle-ci.

**0132482**

REVENDICATIONS

1. Procédé de conservation sous déshydratation lente de produits contenant une certaine quantité d'eau telle que notamment les céréales ou semences, caractérisé en ce que l'on place le produit dans une enceinte étanche et que l'on met le produit sous vide et que l'on entretient ce vide.

2. Procédé de conservation selon la revendication 2, caractérisé en ce que l'on entretient le vide à une valeur légèrement inférieure à celle de la vapeur d'eau à la température de stockage et tel que l'hygrométrie du milieu interstitiel du produit stocké soit maintenue à une valeur inférieure à 100 % HR.

3. Procédé de conservation selon la revendication 1, caractérisé en ce que l'on crée un balayage du milieu interstitiel dans sensiblement l'ensemble du produit stocké par la vapeur d'eau sèche évacuée par l'installation de pompage sous vide.

4. Procédé de conservation selon la revendication 1, caractérisé en ce que l'on introduit et/ou évacue les produits de l'enceinte par l'intermédiaire d'un sas.

5. Installation de conservation des produits contenant une certaine quantité d'eau notamment des céréales et semences, par déshydratation lente selon le procédé de la revendication 1, caractérisée par le fait qu'elle présente des moyens pour créer une atmosphère de conservation des produits présentant une teneur en eau élevée.

6. Installation selon la revendication 5, caractérisée par le fait que les moyens se présentent sous la forme d'une pompe à vide (12) qui entretient le vide dans l'installation (1) autour d'une valeur fixée.

7. Installation selon la revendication 6, caractérisée par le fait que la valeur du vide est            inférieure à celle de la tension de vapeur d'eau saturante à la température de stockage du produit qui retiennent leur eau par l'énergie de sorption.

8. Installation selon la revendication 6, caractérisée par le fait que l'hygrométrie du milieu interstitiel du produit stocké est maintenue à une valeur inférieure à 100 % HR.

9. Installation selon la revendication 6, caractérisée par le fait que l'orifice (23) du pompage du vide dans l'installation (1) est situé sensiblement au milieu du produit stocké (2).

10. Installation selon la revendication 6, caractérisée par le fait qu'elle est équipée d'un sas de sortie (20) et/ou d'entrée du produit stocké.

FIG 1

Courbe d'équilibre d'humidité AIR-MAIS-Grain
Etablie a 25°C

FIG 2

0132482

FIG 3

FIG 4

**Office européen des brevets**

**RAPPORT DE RECHERCHE EUROPEENNE**

0132482

Numéro de la demande

EP 83 44 0043

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | BE-A- 407 881 (VAN REETH)<br>* Revendications 1-4 * | 1,5 | A 23 B 9/00 |
| A | FR-A- 838 284 (BOREL)<br>* Résumé, points 1,3,10 * | 1,5,6 | |
| A | US-A-2 163 628 (O.H. PILKEY)<br>* Revendication * | 1 | |

DOMAINES TECHNIQUES RECHERCHES (Int. Cl. ³)

A 23 B
A 23 L
B 65 D

Le présent rapport de recherche a été établi pour toutes les revendications

| Lieu de la recherche<br>LA HAYE | Date d'achèvement de la recherche<br>08-03-1984 | Examinateur<br>GUYON R.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82